# EUROPEAN PATENT APPLICATION

(11) **EP 4 625 376 A1**
(43) Date of publication of application: **01.10.2025**
(21) Application number: 25164692.3
(22) Date of filing: 19.03.2025
(51) Int. Cl.: G07F 17/42, G07F 17/32

(54) **TICKETING DEVICE, TICKETING PROGRAM, AND TICKETING SYSTEM**

(30) Priority: 27.03.2024 JP 2024050794
(71) Applicant: Bandai Co., Ltd., Tokyo 111-8081 (JP)
(72) Inventor: UCHIDA, Masaya, Tokyo, 108-0073 (JP); SHOJI, Satomi, Tokyo, 108-0073 (JP); OKABE, Yuki, Tokyo, 108-0073 (JP); WATANABE, Ryuya, Tokyo, 108-0073 (JP)
(74) Representative: Studio Torta S.p.A.

(57) **Abstract**

A ticketing device (10) includes a main body (10A) a thermal printer (13), and a code scanner (14). The thermal printer (13) is provided in the main body (10A). The code scanner (14) is provided in the main body (10A) and is capable of registering a plurality of pieces of commercial good information that are providable to a user of a first type. The thermal printer (13) is capable of attaching one selected from among the plurality of pieces of commercial good information registered in the code scanner (14) to a ticket and issuing the ticket.

## Description

### BACKGROUND OF THE INVENTION

### 1. Field of the Invention

The present invention relates to a ticketing device, a ticketing program, and a ticketing system.

### 2. Description of the Related Art

A commercial good offering system based on online lottery has been developed as a commercial good offering system that enables consumers to participate in a campaign while having fun and reduces the burden on the campaign organizer while promoting the commercial goods (refer to, for example, Japanese Unexamined

Patent Application Publication No. 2005-070937).

### SUMMARY OF THE INVENTION

For service providers who offer commercial goods, it is desirable to be able to efficiently manage the commercial goods they offer. In this regard, improvements can still be made.

Accordingly, it is an object of the present invention to provide a ticketing device, a ticketing program, and a ticketing system that can improve convenience for service providers.

According to an aspect of the present invention, a ticketing device includes a main body, a ticketing unit provided in the main body, and a registration unit that is provided in the main body and is configured to register a plurality of pieces of commercial good information providable to a user of a first type. The ticketing unit is configured to attach one selected from among the plurality of pieces of commercial good information registered in the registration unit to a ticket and issue the ticket.

According to another aspect of the present invention, a non-transitory computer-readable recording medium stores a ticketing program including executable instructions which, when executed by a computer, cause the computer to function as a registration unit of a ticketing device including a main body and a ticketing unit provided in the main body. The registration unit is configured to register a plurality of pieces of commercial good information providable to a user of a first type, and the ticketing unit is configured to attach one selected from among the plurality of pieces of commercial good information registered in the registration unit to a ticket and issue the ticket.

According to a still another aspect of the present invention, a ticketing system includes the above-described ticketing device and a server configured to communicate with the ticketing device.

According to the present invention, it is possible to provide a ticketing device, a ticketing program, and a ticketing system that can improve convenience for service providers.

### BRIEF DESCRIPTION OF THE DRAWINGS

Fig. 1 is a front view of a ticketing device according to an embodiment;
Fig. 2 is a side view of the ticketing device with its door portion open;
Fig. 3 is a block diagram illustrating an example of the functional configuration of the ticketing device;
Fig. 4 illustrates an example of the configuration of a ticketing system;
Fig. 5 illustrates an example of a game selection screen displayed on a touch panel monitor of the ticketing device;
Fig. 6 illustrates an example of a commercial good selection screen that is displayed when a "TICKET" button is selected;
Fig. 7 illustrates an example of a purchase count selection screen that is displayed when an option "Dinosaur Lottery" is selected;
Fig. 8 illustrates an example of a payment screen that is displayed when an "OK" button is tapped;
Fig. 9 illustrates an example of a lottery screen that is displayed when the payment for a purchased lottery is completed;
Fig. 10 illustrates an example of a stock checking screen that is displayed when an item checking tab is tapped;
Fig. 11 illustrates an example of a commercial good winning screen that is displayed when the lottery option is selected on the lottery screen illustrated in Fig. 9;
Fig. 12 illustrates another commercial good winning screen that is displayed when the lottery option is selected;
Fig. 13 illustrates an example of a receipt output screen that is displayed when selection of lottery draws equal in number to the number of purchased lottery draws is completed.
Fig. 14 illustrates an example of a game position determination screen that is displayed when a "SKILL" button is selected and the payment for lottery is completed;
Fig. 15 illustrates a count-up screen which is an example of a game screen; and
Fig. 16 illustrates a memory game screen which is another example of the game screen.

### DESCRIPTION OF THE PREFERRED EMBODIMENTS

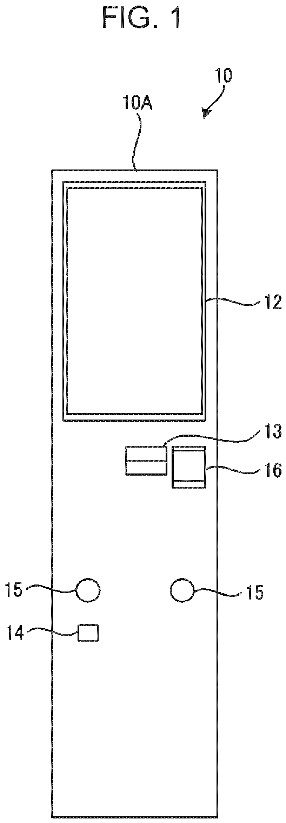

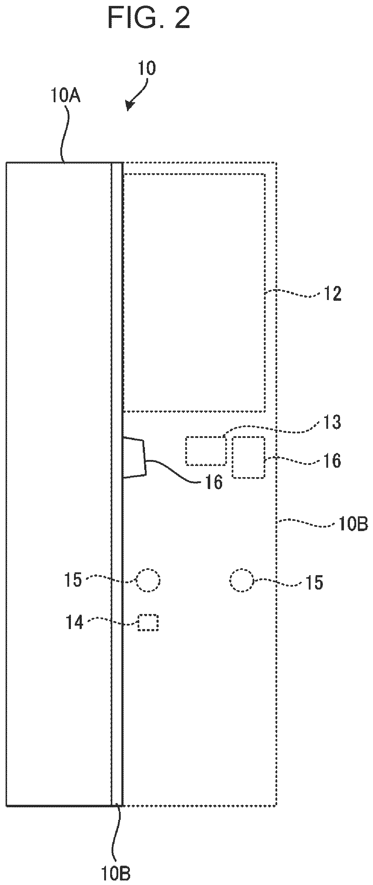

A ticketing device, a ticketing program, and a ticketing system according to an aspect of the present invention are described below with reference to the accompanying drawings. Fig. 1 is a front view of a ticketing device 10 according to an embodiment. Fig. 2 is a side view of the ticketing device 10 with a door portion 10B thereof open.

The ticketing device 10 has a main body 10A configured to have, for example, a box shape and a door portion 10B attached to the front surface of the main body 10A. The one side portion of the main body 10A serves as a shaft about which the door portion 10B can be opened and closed with respect to the main body 10A. The ticketing device 10 further includes a touch panel monitor 12, which is an example of a "presentation unit" according to the present invention, a thermal printer 13, which is an example of a "ticketing unit" according to the present invention, a code scanner 14, which is an example of a "registration unit" according to the present invention, a loudspeaker 15, a payment terminal 16, which is an example of "payment means" according to the present invention.

The ticketing device 10 is a device that performs a lottery process for, for example, a lottery drawn by the customer or a result of a game played by the customer and issue a ticket that can be redeemed for a predetermined commercial good. The predetermined commercial good is one of a plurality of types of commercial goods that belong to a particular title. An example of the particular title is a "character series" including a plurality of characters. The customer can select any character series from among a plurality of character series prepared in advance and can win a commercial good associated with the character series as the lottery result of a lottery drawn or a game played by the customer themselves. The customer is an example of a "user of a first type" according to the present invention.

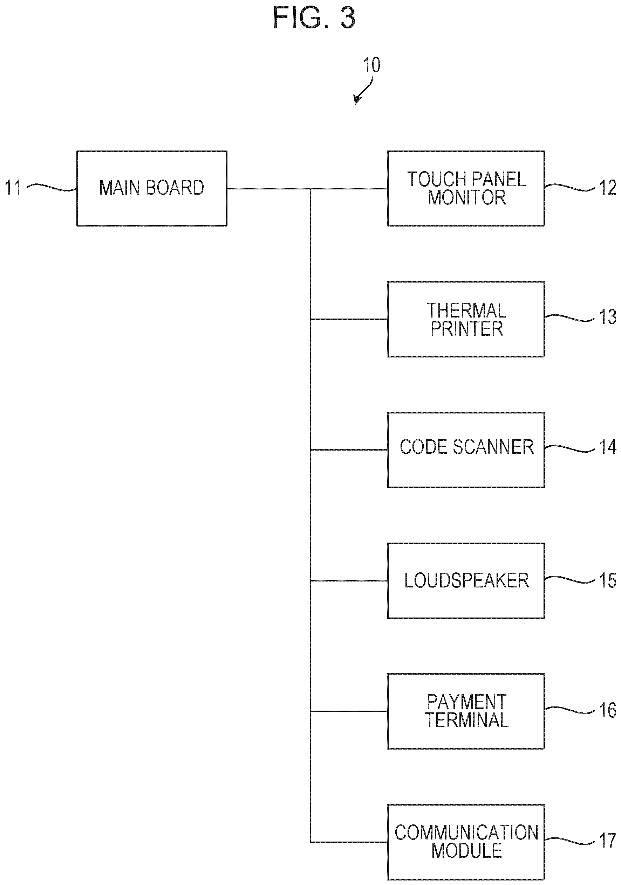

Fig. 3 is a block diagram illustrating an example of the functional configuration of the ticketing device 10. As illustrated in Fig. 3, the ticketing device 10 includes a main board 11 and a communication module 17, in addition to the touch panel monitor 12, thermal printer 13, code scanner 14, loudspeaker 15, and payment terminal 16. The touch panel monitor 12, thermal printer 13, code scanner 14, loudspeaker 15, payment terminal 16, and communication module 17 are electrically connected to the main board 11. The main board 11 is an example of the "registration unit" according to the present invention. The main board 11 is also an example of a "lottery processing unit" according to the present invention. The main board 11 includes a central processing unit (CPU). The CPU of the main board 11 controls each of the units on the basis of a ticketing program stored in a storage unit (not illustrated) and, thus, controls a ticketing process for commercial goods and the like.

The touch panel monitor 12 is a monitor that presents the commercial good information about commercial goods that can be offered to customers. The commercial goods that can be offered to customers are commercial goods registered in the main board 11. The touch panel monitor 12 can present, for example, a plurality of pieces of the commercial good information that can be offered to customers before the customer makes a payment using the payment terminal 16. The touch panel monitor 12 can also present at least one of the selected commercial good information and the prize name of the commercial good to the customer in the result of the lottery process performed by the main board 11.

Thermal printer 13 can issue a ticket having with one selected by lottery from among a plurality of pieces of commercial good information registered in the main board 11. The ticket is made of paper medium. An example of the ticket is a "receipt" that can be redeemed for an actual commercial good. The thermal printer 13 can issue a ticket with only commercial good information that is registered in the main board 11 and does not issue a ticket for a commercial good that is not registered in the main board 11.

The thermal printer 13 can issue a ticket with the commercial good information selected as a result of the lottery process performed by the main board 11. The thermal printer 13 can also issue a ticket with the prize name selected as a result of the lottery process performed by the main board 11. The prize names include a prize name of a first type with which one commercial good is associated and a prize name of a second type with which a plurality of commercial goods are associated. The thermal printer 13 can issue a ticket with one of a prize name of the first type and a prize name of the second type. For example, if a prize name of the first type is "Prize A," then one commercial good is associated with Prize A. If a prize name of the second type is "Prize G," a plurality of commercial goods, such as a sticker, a magnet wall clip, and the like, are associated with Prize G, and a customer chooses one from among the plurality of commercial goods.

The thermal printer 13 can issue a ticket with the commercial good information about the selected commercial good on the condition that a prize name of the second type is selected as a result of the lottery process performed by the main board 11 and that the customer has selected one of the plurality of commercial goods associated with the prize name of a second type.

The thermal printer 13 can issue a ticket on the condition that the payment has been completed by using the payment terminal 16. In addition, the thermal printer 13 can issue a ticket after presenting, on the touch panel monitor 12, at least one of the selected piece of commercial good information and the selected prize name as a result of the lottery process performed by the main board 11.

Each of a plurality of pieces of commercial good information registered in the main board 11 has one of a plurality of prize names set therefor. The thermal printer 13 can issue a ticket with one of the plurality of prize names.

The thermal printer 13 includes a printing unit that can print commercial good information and other information on a paper medium. The thermal printer 13 is configured such that a vendor (different from a customer) involved in providing tickets can access the thermal printer 13 by opening the door portion 10B of the main body 10A toward the front (refer to Fig. 2). The printing unit of the thermal printer 13 is also configured such that ticket paper can be refilled by opening the door portion 10B. The vendor is an example of a "user of a second type" according to the present invention.

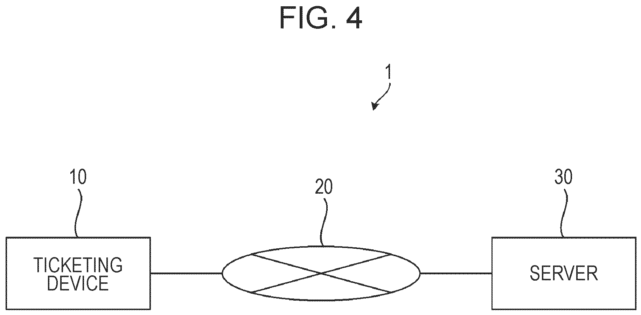

The code scanner 14 reads a code containing the plurality of pieces of commercial good information that can be provided to the customer. The code further contains information (a request destination) used to retrieve the "plurality of pieces of commercial good information" from the server. The term "plurality of pieces of commercial good information" refers to character series information including a plurality of pieces of character information. The server is, for example, an external server 30 (described below in Fig. 4) that can communicate with the ticketing device 10. The code scanner 14 is provided on an outer surface of the main body 10A and is configured to read a code relating to restock of a commercial good supplied by the vendor without opening the door portion 10B.

The loudspeaker 15 can provide audio output of information about ticketing performed by the ticketing device 10. For example, it is possible to provide, to the customer, auditory assistance regarding the ticketing operation. More specifically, the loudspeaker 15 provides auditory assistance regarding the operation procedures for a lottery to be drawn by the customer or a game to be played by the customer, for example.

The payment terminal 16 is a terminal that can be used for, for example, payment by credit card and payment by code. To allow for cash payment, a coin payment module including, for example, a coin selector and a cash box may be provided.

The communication module 17 is a module that can communicate with the external server 30 (described below in Fig. 4), which is the source of the commercial good information. The communication module 17 is an LTE terminal that can communicate by LTE (Long Term Evolution), for example.

The main board 11 can register therein a plurality of pieces of commercial good information that can be provided to customers. The main board 11 can register therein all the pieces of commercial good information regarding the character series indicated by the code read by the code scanner 14. Each of character series includes a plurality of pieces of commercial good information (also referred to as commercial good group information) that can be provided to customers for the character series. Therefore, the main board 11 can register commercial good information groups for a plurality of character series by reading a plurality of codes. The main board 11, together with the code scanner 14, can register a plurality of pieces of commercial good information that are included in a character series and that can be provided to the customers by registering the character series information.

After the customer selects a character series, the main board 11 can perform a lottery process to select one of the pieces of commercial good information included in the selected character series. For example, the main board 11 can perform a lottery process to select a prize name corresponding to a piece of commercial good information. In addition, the main board 11 can perform the lottery process on the condition that payment using the payment terminal 16 is made.

The ticketing device 10 does not include a providing unit for handing over an actual commercial good corresponding to the commercial good information attached to the ticket.

Fig. 4 illustrates an example of the configuration of the ticketing system 1. As illustrated in Fig. 4, the ticketing system 1 includes the ticketing device 10 and the server 30 that can communicate with the ticketing device 10. The ticketing device 10 and the server 30 can be connected to each other via a network 20.

The ticketing device 10 acquires a plurality of pieces of commercial good information that can be offered to customers from the server 30 via the network 20. The server 30 is a server that can manage the sales of commercial goods for each of ticketing devices based on the commercial good information sent to and received from the ticketing device. In the description above, the main board 11 is configured to function as the lottery processing unit that performs the lottery process, but the configuration is not limited thereto. For example, the server 30 may function as the lottery processing unit.

The ticketing operation performed by the ticketing device 10 is described below.

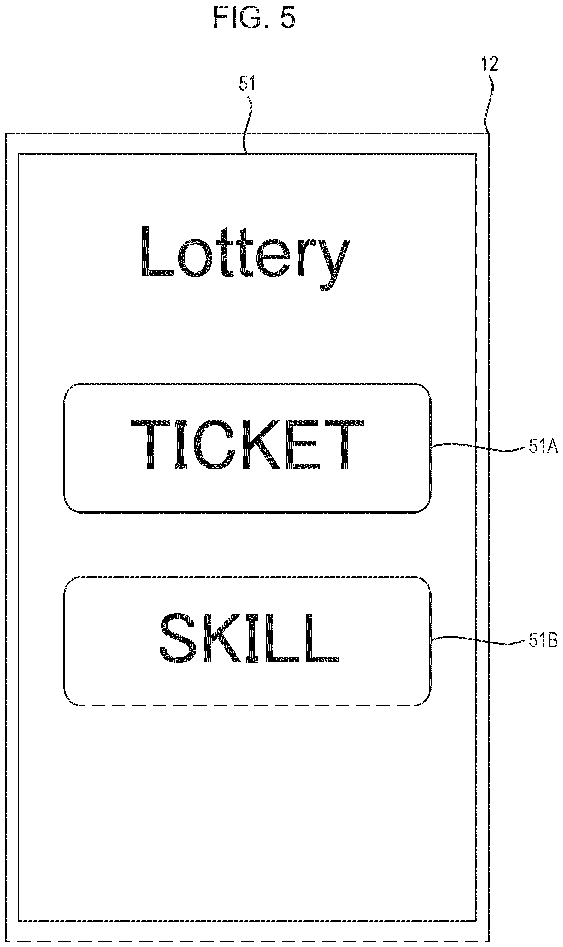

Fig. 5 illustrates an example of a game selection screen 51 displayed on the touch panel monitor 12 of the ticketing device 10. To issue a ticket, for example, a "ticketing start button" (not illustrated) displayed on the touch panel monitor 12 is tapped to transition the screen to the game selection screen 51. The game selection screen 51 includes, for example, a "TICKET" button 51A and a "SKILL" button 51B. The "TICKET" button 51A is a button for drawing lottery (lots) of a first lottery type that does not require a game playing operation performed by the customer. The "SKILL" button 51B is a button for drawing lottery (lots) of a second lottery type that requires a game playing operation performed by the customer. The ticketing device 10 can conduct the lottery of either the first or second lottery type.

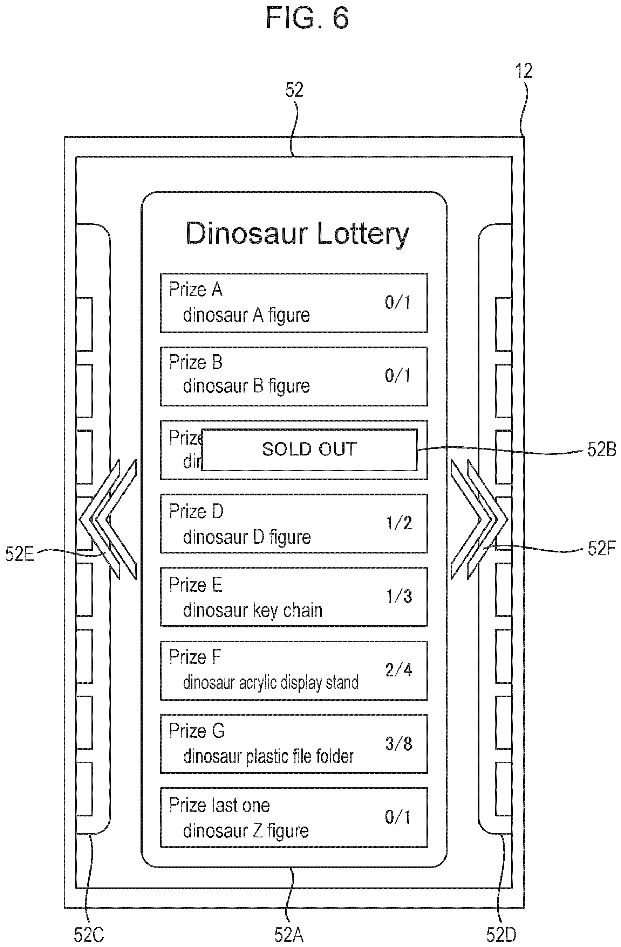

Fig. 6 illustrates an example of a commercial good selection screen 52 that is displayed when the "TICKET" button 51A is selected. The commercial good selection screen 52 displays the options of the TICKET lottery that are prepared for selection. The commercial good selection screen 52 illustrated in Fig. 6 displays a "Dinosaur Lottery" option 52A as one of the selectable options. The "Dinosaur Lottery" option 52A displays the text "Dinosaur Lottery" that is a title (character series) and a plurality of pieces of commercial good information regarding the plurality of characters included in the title. The plurality of characters are commercial good information registered in the main board 11. More specifically, in the "Dinosaur Lottery" option 52A, Dinosaur A Figure, Dinosaur B Figure, Dinosaur C Figure, Dinosaur D Figure, Dinosaur Key Chain, Dinosaur Acrylic Stand, Dinosaur Plastic File Folder, Dinosaur Z Figure, and the prize names (Prizes A to G and Last One Prize) each corresponding to one of the commercial goods are displayed. For example, a "SOLD OUT" label 52B is displayed for a prize name for which the stock of the commercial good has run out. For example, the text "1/3" for Prize E (Dinosaur Key Chain) indicates that the dinosaur lottery includes Prize E consisting of three identical prizes, one of which has been selected and, thus, the other two are available. The commercial good selection screen 52 displays whether each of the commercial goods included in the character series is in stock or out of stock.

In addition to the "Dinosaur Lottery" option 52A, other TICKET lottery options that can be selected are prepared, such as lottery options 52C and 52D. If the customer wants to draw the lottery for the option 52C or 52D, the customer taps a scroll button 52E to move the left option 52C to the center of the commercial good selection screen 52 or taps a scroll button 52F to move the right option 52D to the center of the commercial good selection screen 52, for example. By tapping the option displayed at the center, the TICKET lottery ("Dinosaur Lottery" in this example) is selected. In each of the options, the image of a commercial good may be displayed in addition to the commercial good information and the prize name.

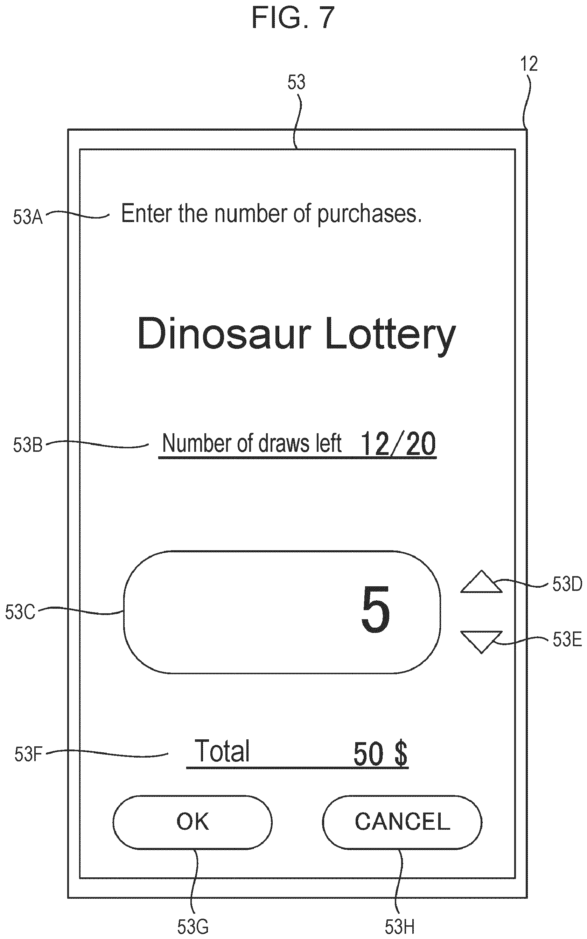

Fig. 7 illustrates an example of a purchase count selection screen 53 that is displayed when the option 52A of "Dinosaur Lottery" is selected. The purchase count selection screen 53 displays an input prompt message 53A (for example, "Enter the number of purchases."). The purchase count selection screen 53 also displays a "Number of lottery draws left" field 53B, which indicates the remaining number of draws that can be drawn in the dinosaur lottery. The displayed text "12/20" indicates that 12 out of 20 prepared lottery draws are left. The purchase count selection screen 53 also displays a "Number of Purchases" field 53C, which indicates the number of purchases entered by the customer (5 in this example). The number of purchases entered can be increased or decreased by operating an increase button 53D or a decrease button 53E. However, the number of lottery purchases (the number of lottery draws) is limited to any selectable number that is less than or equal to a predetermined number. In addition, the purchase count selection screen 53 displays a "Total" field 53F indicating the price required for the purchase (50$ in this example). The purchase count selection screen 53 also displays an "OK" button 53G to accept the displayed information and a "CANCEL" button 53H to cancel the displayed information.

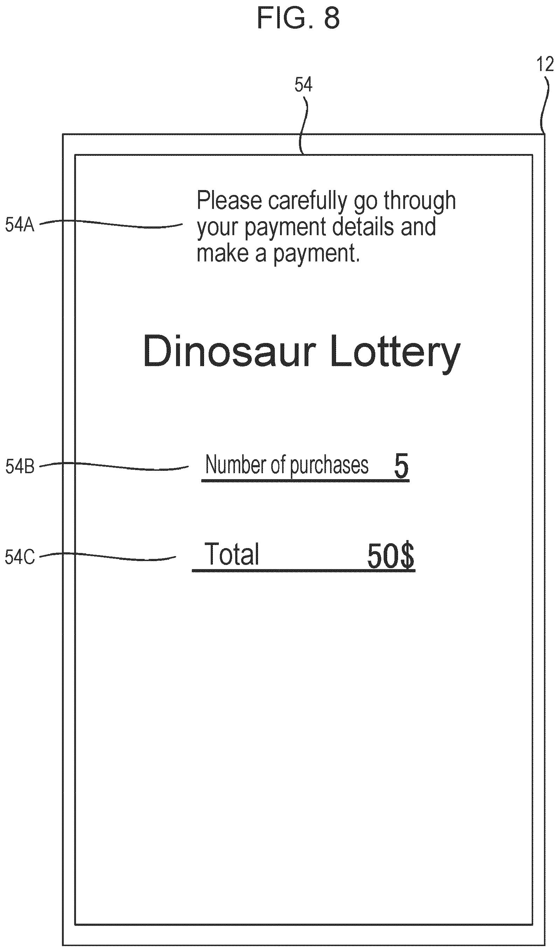

Fig. 8 illustrates an example of a payment screen 54 that is displayed when the "OK" button 53G is tapped. To prompt the customer to pay for the dinosaur lottery purchase, a payment message 54A (for example, "Please carefully go through your payment details and make a payment.") is displayed on the payment screen 54. In addition, the payment screen 54 displays a "number of purchases" field 54B (5 in this example) indicating the number of draws that the customer purchased in dinosaur lottery. In addition, the payment screen 54 displays a "Total" field 54C, which indicates the fee for the dinosaur lottery draws purchased (50$ in this example). After the payment screen 54 is displayed, the ticketing device 10 accepts touch payment by, for example, code input using the payment terminal 16. The ticketing device 10 is also configured to process the payment in accordance with the number of draws drawn on the basis of the number of draws purchased by the customer.

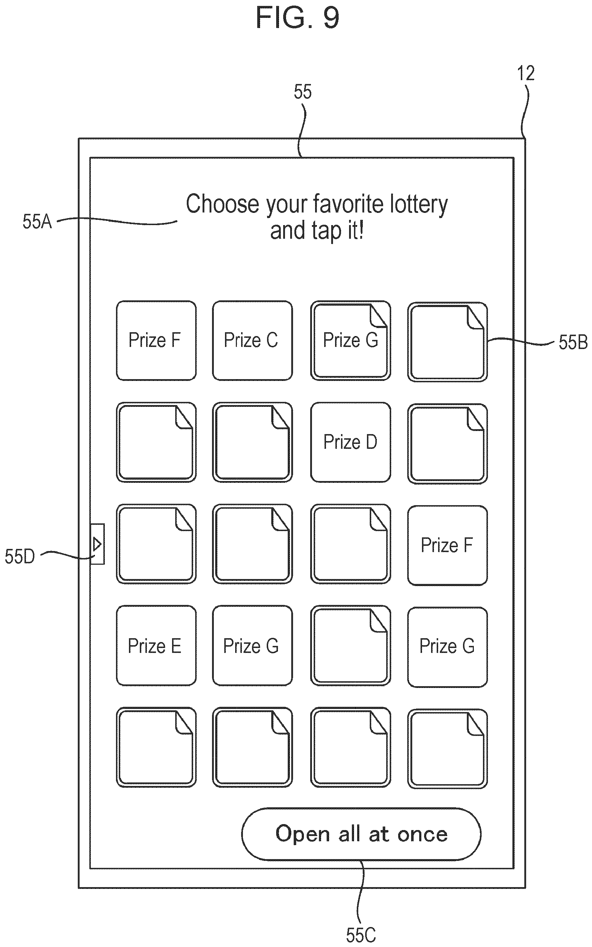

Fig. 9 illustrates an example of a lottery screen 55 that is displayed when the payment for a purchased lottery is completed. The lottery screen 55 displays a selection message 55A, which prompts the user to select a lottery (for example, "Choose your favorite lottery and tap it!"). The lottery screen 55 also displays options 55B (20 options 55B in this example). In addition, the lottery result of each of the options 55B of the present lottery is displayed if the option 55B has already been selected by the customer or another customer. For example, in this example, a total of eight options 55B that have already been selected are illustrated: one for Prize C, one for Prize D, one for Prize E, two for Prize F, and three for Prize G. Such already selected options 55B cannot be selected. Therefore, the customer can select lottery draw from the 12 remaining options 55B of the lottery.

Each of the options 55B of the lottery is associated with one of the commercial goods included in the character series. The ticketing device 10 selects one of the pieces of the commercial good information included in the selected character series by lottery. The lottery screen 55 also displays an "Open all at once" button 55C, which allows the customer to automatically select the lottery draws equal in number to the number of purchased draws all at once. When the "Open all at once" button 55C is tapped, the pieces of commercial good information equal in number to the number of remaining purchased draws are automatically selected at random. The lottery screen 55 also displays an item checking tab 55D, which enables the customer to check the stocks of commercial goods for the TICKET lottery that the customer currently plays.

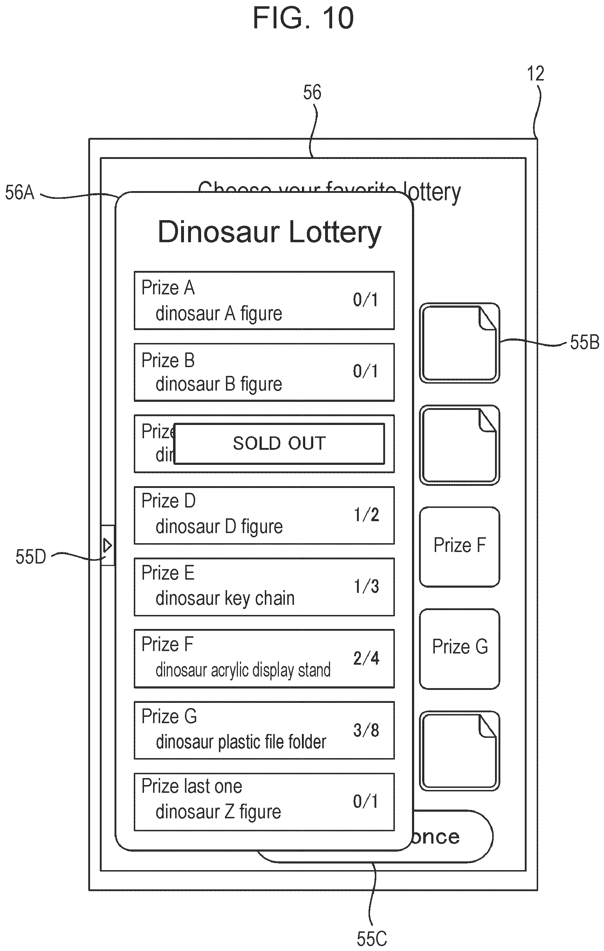

Fig. 10 illustrates an example of a stock checking screen 56 that is displayed when the item checking tab 55D is tapped. The stock checking screen 56 displays a commercial good and stock list 56A that indicates the types of commercial goods (characters) that can be won in the current lottery and the numbers of the remaining commercial goods. Since the lottery currently being conducted is a dinosaur lottery, the commercial good and stock list 56A has the same information as the "Dinosaur Lottery" option 52A illustrated in Fig. 6. The commercial good and stock list 56A is displayed on the lottery screen 55 illustrated in Fig. 9, for example.

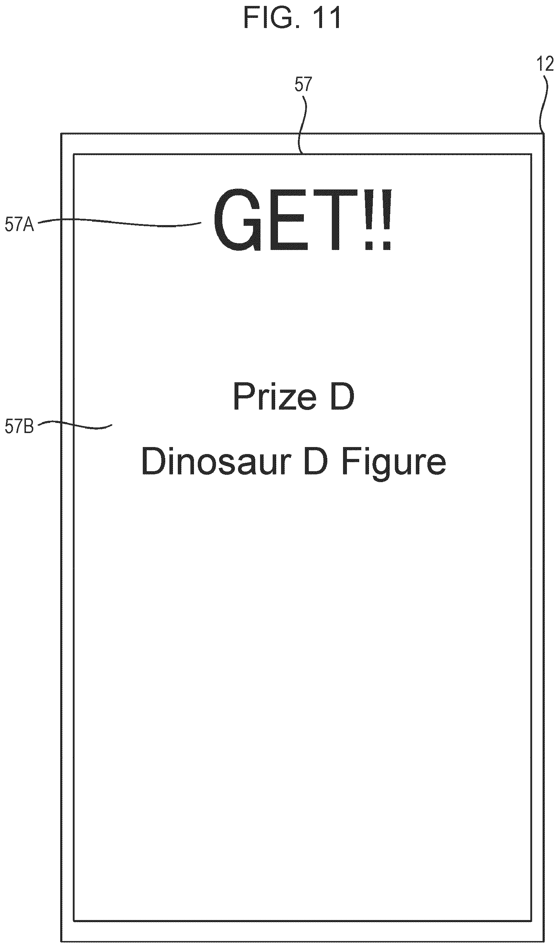

Fig. 11 illustrates an example of a commercial good winning screen 57 that is displayed when the option 55B of the lottery is selected on the lottery screen 55 illustrated in Fig. 9. The commercial good winning screen 57 displays a winning message 57A, such as "GET!!", which notifies the customer that they have won the commercial good as a result of the lottery. In addition, the commercial good winning screen 57 displays winning commercial good information 57B, such as "Prize D: Dinosaur D Figure", which notifies the customer of the prize name and the commercial good that the customer won. In addition to the prize name and commercial good name, the image of the commercial good (Dinosaur D Figure) that the customer won may also be displayed on the commercial good winning screen 57.

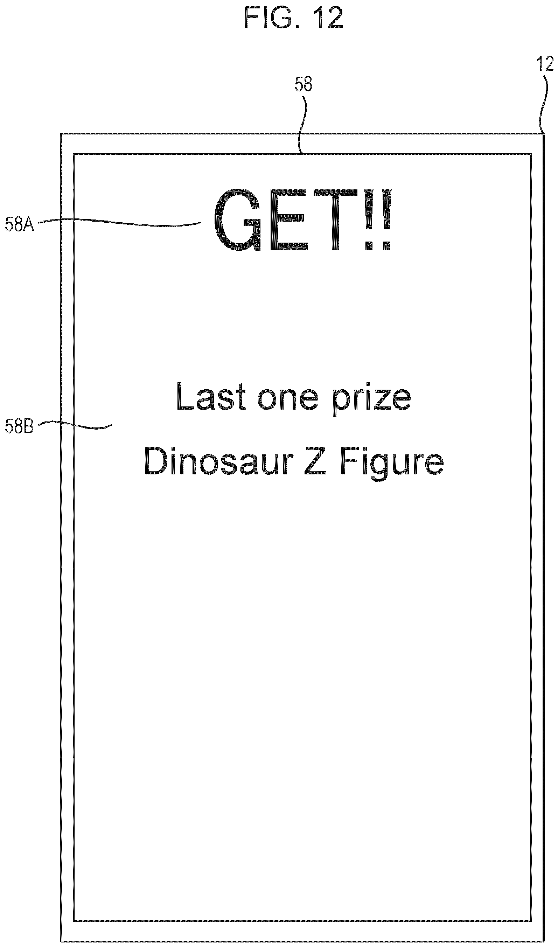

Fig. 12 illustrates another commercial good winning screen 58 that is displayed when the option 55B of the lottery is selected. The commercial good winning screen 58 is an additional commercial good winning screen that is displayed when the last option 55B is selected. For example, as described above, in a dinosaur lottery for 20 draws, if the customer purchases the last (20th) draw and opens (selects) the option 55B for the draw, the customer is notified of the prize name and the commercial good that the customer won for the option 55B of the 20th lottery draw, in the same manner as in the commercial good winning screen 57 in Fig. 11. Then, the commercial good winning screen 58 is displayed to notify the customer that the commercial good for Last One prize, which is a bonus commercial good, is awarded to the customer. As in Fig. 11, a winning message 58A, such as "GET! !", which notifies the customer that they have won the commercial good as a result of the lottery is displayed on the commercial good winning screen 58. In addition, the commercial good winning screen 58 displays winning commercial good information 58B, such as "Last One Prize Dinosaur Z Figure," that notifies the customer of the prize name and the commercial good that the customer won. In addition to the prize name (Prize Last One) and the commercial good name, the image of the commercial good (Dinosaur Z Figure) that the customer won may also be displayed on the commercial good winning screen 58.

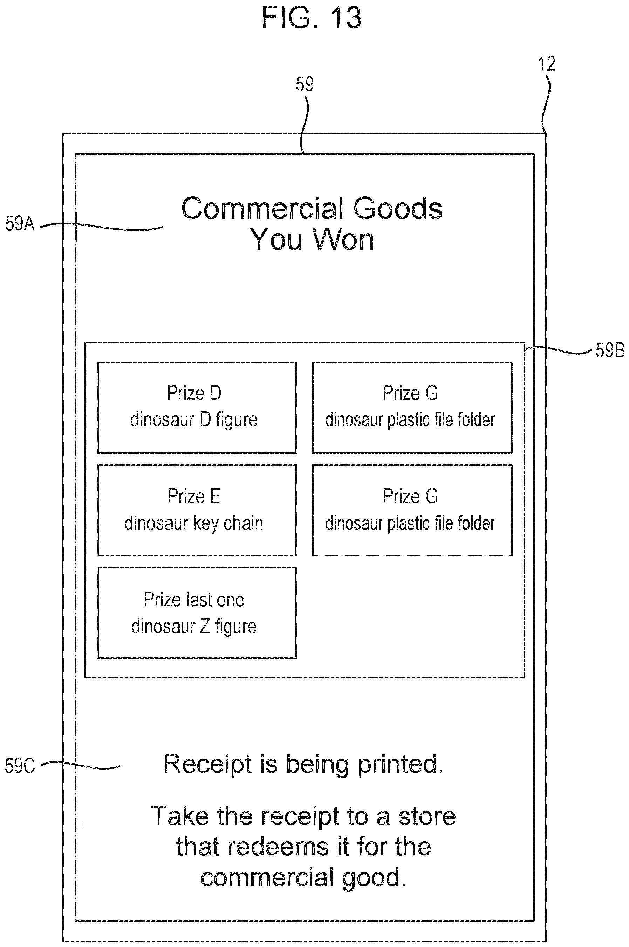

Fig. 13 illustrates an example of a receipt output screen 59 that is displayed when selection of lottery draws equal in number to the number of purchased lottery draws is completed. The receipt output screen 59 displays a commercial good winning message 59A, such as "Commercial Goods You Won", which indicates that there is a commercial good that the customer won. The receipt output screen 59 includes a commercial good display field 59B that lists the commercial goods the customer won. The commercial good display field 59B displays the commercial goods that the customer won in the lottery, such as "Prize D Dinosaur D Figure", "Prize E Dinosaur Key Chain", two of "Prize G Dinosaur plastic file folder", and "Prize Last One Dinosaur Z Figure". In addition, the receipt output screen 59 displays a print notification message 59C (for example, "Receipt is being printed. Take the receipt to a store that redeems it for the commercial good.") notifying the customer that the receipt is printed. The receipt is printed by the thermal printer 13. The receipt has, thereon, the prize name selected in the lottery draw. In this example, five receipts are printed, each corresponding to one of the commercial goods the customer won. The image of each of the commercial goods the customer won may be displayed in the commercial good display field 59B, along with the corresponding receipt.

The case where the "SKILL" button 51B is selected on the game selection screen 51 illustrated in Fig. 5 is described below. When the "SKILL" button 51B is selected, the screen also transitions to the commercial good selection screen 52. Then, when, for example, the "Dinosaur Lottery" option 52A is selected on the commercial good selection screen 52, the screen transitions to the purchase count selection screen 53. Then, when the "OK" button 53G is tapped on the purchase count selection screen 53, the screen transitions to the payment screen 54. These processes are the same as those described above when the "TICKET" button 51A is selected.

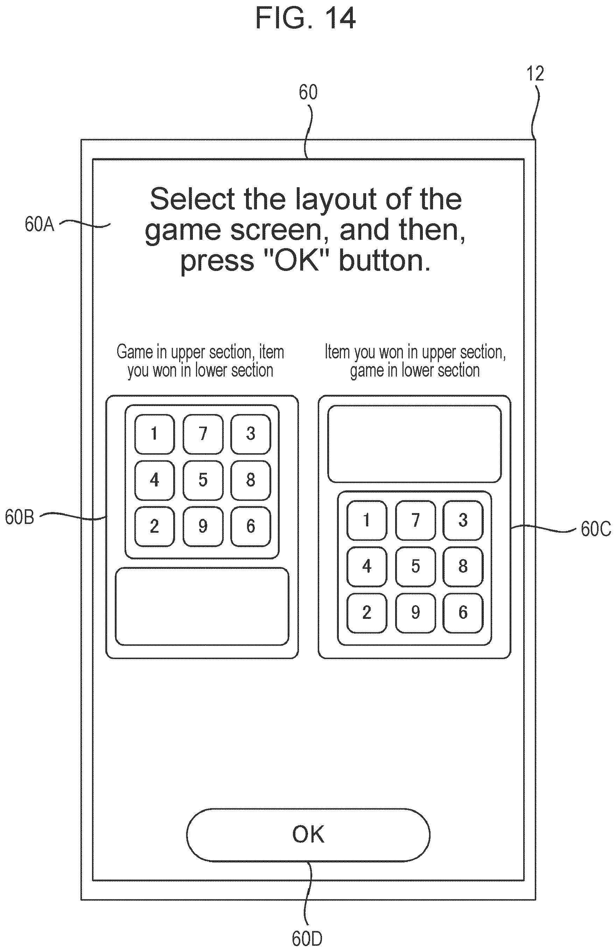

Fig. 14 illustrates an example of a game position determination screen 60 that is displayed when the "SKILL" button 51B is selected and payment for the lottery is made. The game position determination screen 60 displays a guiding message 60A that enables the customer to select a game screen for game play. For example, the message "Select the layout of the game screen, and then, press "OK" button." is displayed as the guiding message 60A. The game position determination screen 60 also displays options 60B and 60C of the game screen layout. The option 60B corresponds to a screen layout in which the game screen is displayed on the upper side and a winning item screen is displayed on the lower side. The option 60C corresponds to a screen layout in which the winning item screen is displayed on the upper side and the game screen is displayed on the lower side. The game screen in the option 60B is for children who are short in height, for example. The game position determination screen 60 also displays an "OK" button 60D that can be tapped after selection of the layout of the game screen to start game play.

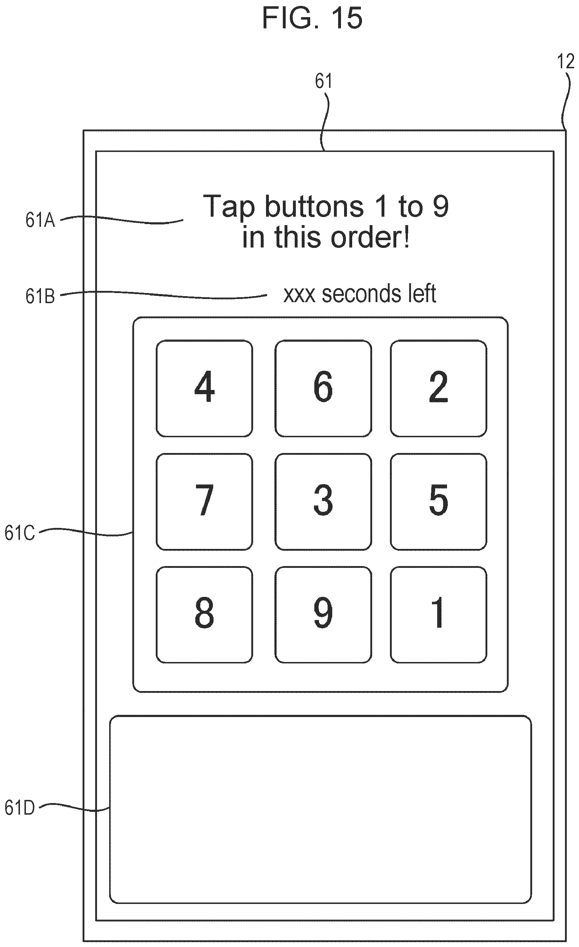

Fig. 15 illustrates a count-up screen 61, which is an example of the game screen. The count-up screen 61 displays a game operation message 61A that describes how to play the game. For example, the message "Tap buttons 1 to 9 in this order!" is displayed as the game operation message 61A. The count-up screen 61 also displays a remaining time 61B, which indicates the time limit of the game. For example, "xxx seconds left" is displayed. The count-up screen 61 has a game region 61C for tapping operations. The count-up screen 61 also has a commercial good display field 61D that displays the commercial good information about a commercial good that the customer won in the game.

Each time the customer clears the game, a lottery is conducted for the game, and one of commercial goods is selected by the lottery. When a commercial good is selected in the lottery, the screen transitions to, for example, the commercial good winning screen 57 illustrated in Fig. 11, and the information about the commercial good obtained by the selection is displayed. If any purchased lottery draw still remains after the game completes, the screen transitions to a screen for a next game (a different type of game). When the customer clears the last game, the screen transitions to the commercial good winning screen 57 and, thereafter, transitions to the commercial good winning screen 58 illustrated in Fig. 12. When the games equal in number to the number of purchased games have been completed, the screen transitions to the receipt output screen 59 illustrated in Fig. 13.

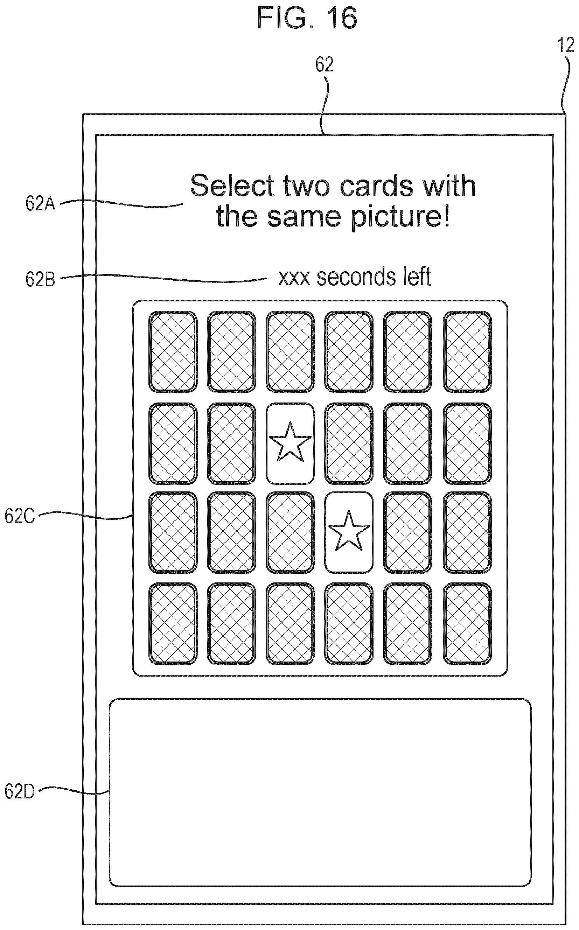

Fig. 16 illustrates a memory game screen 62, which is another example of the game screen. The memory game screen 62 displays a game operation message 62A that describes how to play the game. For example, the message "Select two cards with the same picture!" is displayed as the game operation message 62A. The memory game screen 62 also displays a remaining time 62B, which indicates the time limit of the game. For example, "xxx seconds left" is displayed. The memory game screen 62 has a game region 62C for card selection operations. The memory game screen 62 also has a commercial good display field 62D that displays the commercial good information about a commercial good that the customer won in the game.

The configuration is such that when the "SKILL" button 51B is selected, the customer can play the same number of games as the number of selected lottery draws. In addition, the configuration is such that any one of a plurality of types of games prepared in advance can be presented to the customer. In addition, the configuration is such that any one of the plurality of types of games can be selected at random and be presented. Furthermore, the configuration is such that the same type of game is not presented in succession.

Let T1 be the time period from the selection of the "TICKET" button 51A for drawing a lottery of the first lottery type illustrated in Fig. 5 to the presentation of the commercial good information selected by the lottery in Fig. 11. Let T2 be the time period from the selection of the "SKILL" button 51B for drawing a lottery of the second lottery type illustrated in Fig. 5 to the presentation of the commercial good information selected by the lottery in Fig. 11. Then, the configuration is such that the time period T2 when a lottery of the second type is selected is greater than the time period T1 when a lottery of the first type is selected either by the amount of time required for the game playing operation performed by the customer or by the amount of dramatic impact time.

As described above, the ticketing device 10 according to the present aspect can register a plurality of pieces of commercial good information contained in a code read by the code scanner 14 in the main board 11 and issue a ticket with one selected from among the plurality of pieces of registered commercial good information. This allows a ticket issuing vendor to easily restock commercial good information to be provided to customers in the ticketing device 10 simply by causing the code scanner 14 to read the code. Thus, convenience of the service provider is improved. For example, by registering character series information in association with a code, a plurality of characters included in the character series can be registered as commercial good information. Thus, convenience of the service provider is improved.

In addition, since the code scanner 14 is provided on the outer surface of the main body 10A of the ticketing device 10, the vendor can cause the code scanner 14 to read the code without opening the door portion 10B, which improves the convenience of the service provider.

Furthermore, the ticketing device 10 performs a lottery process for a commercial good selected from the registered commercial good information and issues a ticket, on the condition that the customer has made a payment through the payment terminal 16. This makes it possible for the service provider to issue a ticket with information about the commercial good selected by the lottery to an appropriate customer who has made a payment. Therefore, convenience for the service provider is improved.

Furthermore, the ticketing device 10 presents the registered commercial good information to the customer before payment is made using the payment terminal 16. As a result of a lottery process based on a lottery drawn by the customer, the ticketing device 10 presents the selected commercial good information and prize name to the customer and, thereafter, issues a ticket. This enables the customer who purchases the lottery ticket to easily understand the processes from purchasing a lottery ticket using the ticketing device 10 to winning a commercial good, which increases the customer's interest in purchasing lottery tickets.

In addition, the ticketing device 10 is configured such that the printing unit of the thermal printer 13 can be easily accessed by the vendor by opening the door portion 10B, which improves convenient for the service provider.

Furthermore, the ticketing device 10 issues a ticket to the customer in the form of a paper medium that can be redeemed for an actual commercial good, and the main body 10A does not include a providing unit for providing an actual commercial good associated with the commercial good information attached to the ticket. Therefore, the customer takes the issued ticket to a store that redeems the ticket for a predetermined commercial good, which improves convenience for the service provider.

Furthermore, according to the ticketing system 1, the ticketing device 10 can receive a plurality of pieces of commercial good information contained in the code from the server 30 that can communicate with the ticketing device 10 and register the plurality of pieces of received commercial good information. This allows the vendor that issues the ticket to easily restock the commercial good information to be provided to customers based on the code read by the ticketing device 10, which improves convenience for the service provider.

As described above, the following matters are described herein.
(1) A ticketing device includes a main body, a ticketing unit provided in the main body, and a registration unit that is provided in the main body and that is configured to register a plurality of pieces of commercial good information providable to a user of a first type. The ticketing unit is configured to attach one selected from among the plurality of pieces of commercial good information registered in the registration unit to a ticket and issue the ticket.
(2) In the ticketing device described in Matter (1), the ticketing unit is configured to issue the ticket with only the commercial good information registered in the registration unit.
(3) In the ticketing device described in Matter (1) or (2), the main body further includes a lottery processing unit configured to perform a lottery process, and the ticketing unit is configured to attach the piece of commercial good information selected as a result of the lottery process performed by the lottery processing unit to the ticket and issue the ticket.
(4) In the ticketing device described in Matter (3), the main body further includes payment means, and the lottery processing unit is configured to perform a lottery process on the condition that payment is made by using the payment means.
(5) In the ticketing device described in Matter (4), the ticketing unit is configured to issue the ticket on the condition that payment is made by using the payment means.
(6) In the ticketing device described in Matter (4) or (5), the main body further includes a presentation unit configured to present the commercial good information, and the presentation unit presents the plurality of pieces of commercial good information registered in the registration unit before payment using the payment means is made.
(7) In the ticketing device described in Matter (6), the ticketing unit is configured to issue the ticket after the presentation unit presents at least one of one of the pieces of commercial good information and a prize name selected as a result of the lottery process performed by the lottery processing unit.
(8) In the ticketing device described in any one of Matters (3) to (7), the ticketing unit is configured to issue the ticket with a prize name selected as a result of the lottery process performed by the lottery processing unit.
(9) The ticketing device described in any one of Matters (3) to (7) stores a plurality of pieces of prize name information for each of character series, and the lottery processing unit is configured to perform the lottery process to select a prize name associated with the one of the pieces of commercial good information.
(10) In the ticketing device described in any one of Matters (7) to (9), the prize name is of one of a first type associated with one commercial good and a second type associated with a plurality of commercial goods, and the ticketing unit is configured to issue the ticket with one of the prize name of a first type and the prize name of a second type.
(11) In the ticketing device described in Matter (10), on the condition that the prize name of a second type is selected as a result of the lottery process performed by the lottery processing unit and a user selects one of a plurality of commercial goods associated with the prize name of a second type, the ticketing unit is configured to issue the ticket with the commercial good information regarding the selected commercial good.
(12) In the ticketing device described in Matters (3) to (11), after a character series is selected by the user of a first type, the lottery processing unit is configured to perform the lottery process to select one of the plurality of pieces of commercial good information included in the selected character series.
(13) In the ticketing device described in Matters (1) to (12), each of the plurality of pieces of commercial good information registered in the registration unit is assigned one of the plurality of prize names, and the ticketing unit is configured to issue the ticket with one of the plurality of prize names.
(14) The ticketing device described in any one of Matters (1) to (13) stores the plurality of pieces of commercial good information for each of character series, and the registration unit is configured to register the plurality of pieces of commercial good information included in the character series by registering character series information.
(15) In the ticketing device described in any one of Matters (1) to (14), the main body has a door portion that is openable, and the ticketing unit includes a printing unit. The printing unit is accessible by a user of a second type different from the user of a first type by opening the door portion.
(16) In the ticketing device described in Matter (15), the printing unit is configured to enable restocking of the ticket when the door portion is made open.
(17) In the ticketing device described in Matter (15) or (16), the registration unit is provided on the outer surface of the main body so that the user of a second type is allowed to make registration without opening the door portion.
(18) In the ticketing device described in any one of Matters (1) to (17), the ticket is redeemable for an actual commercial good.
(19) In the ticketing device described in any one of Matters (1) to (18), the ticket is a paper medium.
(20) In the ticketing device described in any one of Matters (1) to (19), the main body does not include a providing unit configured to provide an actual commercial good corresponding to the commercial good information attached to the ticket.
(21) A ticketing program for a ticketing device including a main body and a ticketing unit provided in the main body causes a computer to function as a registration unit configured to register a plurality of pieces of commercial good information providable to a user of a first type, and the ticketing unit is configured to attach one selected from among the plurality of pieces of commercial good information registered in the registration unit to a ticket and issue the ticket.
(22) A ticketing system includes the ticketing device described in any one of Matters (1) to (20) and a server configured to communicate with the ticketing device.

## Claims

1. A ticketing device comprising:
a main body (10A);
a ticketing unit (13) provided in the main body (10A); and
a registration unit (14) that is provided in the main body (10A) and is configured to register a plurality of pieces of commercial good information providable to a user of a first type,
wherein the ticketing unit (13) is configured to attach one selected from among the plurality of pieces of commercial good information registered in the registration unit (14) to a ticket and issue the ticket.

2. The ticketing device according to Claim 1, wherein the ticketing unit (13) is configured to issue the ticket with only the commercial good information registered in the registration unit (14).

3. The ticketing device according to Claim 1, wherein the main body (10A) further includes a lottery processing unit (11) configured to perform a lottery process, and
wherein the ticketing unit (13) is configured to attach the piece of commercial good information selected as a result of the lottery process performed by the lottery processing unit (11) to the ticket and issue the ticket.

4. The ticketing device according to Claim 3, wherein the main body (10A) further includes payment means (16), and
wherein the lottery processing unit (11) is configured to perform a lottery process on the condition that payment is made by using the payment means (16).

5. The ticketing device according to Claim 4, wherein the ticketing unit (13) is configured to issue the ticket on the condition that payment made by using payment means (16).

6. The ticketing device according to Claim 4, wherein the main body (10A) further includes a presentation unit (12) configured to present the commercial good information, and
wherein the presentation unit (12) presents the plurality of pieces of commercial good information registered in the registration unit (14) before payment using the payment means (16) is made,
and wherein the ticketing unit (13) is configured to issue the ticket after the presentation unit (12) presents at least one of one of the pieces of commercial good information and a prize name selected as a result of the lottery process performed by the lottery processing unit (11).

7. The ticketing device according to Claim 3, wherein the ticketing unit (13) is configured to issue the ticket with a prize name selected as a result of the lottery process performed by the lottery processing unit (11).

8. The ticketing device according to Claim 3, wherein the ticketing device stores a plurality of pieces of prize name information for each of character series, and
wherein the lottery processing unit (11) is configured to perform the lottery process to select a prize name associated with the one of the pieces of commercial good information.

9. The ticketing device according to Claim 6, wherein the prize name is of one of a first type associated with one commercial good and a second type associated with a plurality of commercial goods, and
wherein the ticketing unit (13) is configured to issue the ticket with one of the prize name of a first type and the prize name of a second type,
wherein on the condition that the prize name of a second type is selected as a result of the lottery process performed by the lottery processing unit (11) and a user selects one of a plurality of commercial goods associated with the prize name of a second type, the ticketing unit (13) is configured to issue the ticket with the commercial good information regarding the selected commercial good.

10. The ticketing device according to Claim 3, wherein after a character series is selected by the user of a first type, the lottery processing unit (11) is configured to perform the lottery process to select one of the plurality of pieces of commercial good information included in the selected character series.

11. The ticketing device according to Claim 1, wherein each of the plurality of pieces of commercial good information registered in the registration unit (14) is assigned one of the plurality of prize names, and
wherein the ticketing unit (13) is configured to issue the ticket with one of the plurality of prize names.

12. The ticketing device according to Claim 1, wherein the ticketing device stores the plurality of pieces of commercial good information for each of character series, and
wherein the registration unit (14) is configured to register the plurality of pieces of commercial good information included in the character series by registering character series information.

13. The ticketing device according to Claim 1, wherein the main body (10A) has a door portion that is openable, and the ticketing unit (13) includes a printing unit, and
wherein the printing unit is accessible by a user of a second type different from the user of a first type by opening the door portion.

14. The ticketing device according to Claim 15, wherein the registration unit (14) is provided on an outer surface of the main body (10A) so that the user of a second type is allowed to make registration without opening the door portion.

15. The ticketing device according to Claim 1, wherein the ticket is redeemable for an actual commercial good.

16. A computer-readable medium comprising instruction which, when executed by a computer, cause the computer to:
register a plurality of pieces of commercial good information providable to a user of a first type, and
attach one selected from among the plurality of pieces of commercial good information registered in the registration unit (14) to a ticket and issue the ticket.

17. A ticketing system comprising:
the ticketing device according to any one of Claims 1-15; and
a server (30) configured to communicate with the ticketing device.
